# EUROPEAN PATENT SPECIFICATION

(11) **EP 1 177 660 B1**
(45) Date of publication and mention of the grant of the patent: **23.08.2006**
(21) Application number: 00928464.7
(22) Date of filing: 27.04.2000
(51) Int. Cl.: H04L 12/56, H04L 12/28, H04L 29/06, H04L 12/66, H04Q 3/00, H04M 1/57, H04M 3/42, H04M 7/00

(54) **METHODS AND SYSTEMS FOR ROUTING SIGNALING MESSAGES IN A COMMUNICATIONS NETWORK USING CIRCUIT IDENTIFICATION CODE (CIC) INFORMATION**
VERFAHREN UND SYSTEME ZUR LENKUNG VON ZEICHENGABENACHRICHTEN IN EINEM KOMMUNIKATIONSNETZ UNTER VERWENDUNG VON SPRECHKREISADRESS (CIC)-INFORMATION
PROCEDES ET SYSTEMES D'ACHEMINEMENT DE MESSAGES DE SIGNALISATION DANS UN RESEAU DE TELECOMMUNICATION, AU MOYEN D'INFORMATIONS DE CODES D'IDENTIFICATION DE CIRCUIT (CIC)

(30) Priority: 27.04.1999 US 131254 P; 19.11.1999 US 443712
(43) Date of publication of application: 06.02.2002
(73) Proprietor: Tekelec, Calabasas, CA 91302 (US)
(72) Inventor: MILLER, Paul, Andrew, Raleigh, NC 27614 (US); RAVISHANKAR, Venkataramaiah, Apex, NC 27502 (US); MARSICO, Peter, Joseph, Carrboro, NC 27510 (US)
(74) Representative: Reinhard - Skuhra - Weise & Partner
(86) International application number: PCT/US2000/011322
(87) International publication number: WO 2000/065785

(56) References cited:
- WO-A-97/33441
- WO-A-97/46045
- WO-A-99/16256
- US-A- 5 920 562
- US-A- 5 949 871
- US-A- 5 991 301
- US-A- 6 026 091
- US-A- 6 047 005
- FERNANDO CUERVO ET AL: "SS7-Internet Interworking - Architectural Framework" IETF, July 1998 (1998-07), XP002171309
- MCGREW M.: "Transport SS7 Signalling Over IP" 1 November 1998 (1998-11-01) , INTERNET DRAFT , IETF XP002234862 section 1.0 - section 5.0 * figures 1,2 *

## Description

### Related-Application Information

This application is a continuation-in-part of U.S. Patent Application No. 09/205,809, filed December 4, 1998 (pending), a continuation-in-part of U.S. Patent Application No. 09/443,712, filed November 19, 1999 (pending), and further claims the benefit of U.S. Provisional Patent Application No. 60/131,254 filed April 27, 1999.

### Technical Field

The present invention relates to the routing of signaling messages in a communications network, and more particularly to methods and systems for routing a signaling message based, in part, on Circuit Identification Code (CIC) information contained within the message.

### Background Art

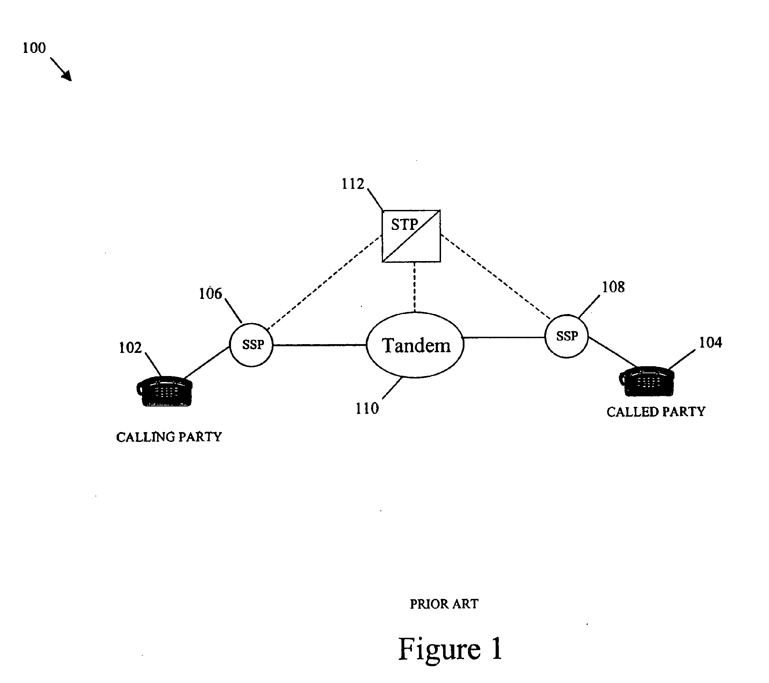

Shown in Figure 1 is a simplified telecommunications network, generally indicated by the numeral **100,** that illustrates the basic process and network components involved in the placement of a typical voice-type call. Telecommunications network **100** includes both a calling party (CgPA) 102 and a called party (CdPA) **104.** Calling party **102** is communicatively coupled to an originating End Office (EO) or Service Switching Point (SSP) **106,** while called party **104** is similarly connected to a terminating EO or SSP **108.** Originating SSP **106** and terminating SSP **108** are, in turn, connected via voice-grade communication trunks or links to a tandem switching office **110.** SSP **106** and SSP **108** are also connected via signaling links to a Signal Transfer Point (STP) **112.** Those skilled in the art of telecommunication network design and operation will appreciate that a typical call setup process begins when calling party **102** goes off-hook and begins dialing a telephone number associated with the called party **104.** As such, originating SSP **106** receives and interprets the digits dialed by calling party **102** and subsequently selects one of a plurality of voice-grade links for use with the attempted call. Having selected and reserved a specific voice-grade link, SSP **106** then formulates an Integrated Service Digital Network (ISDN) User Part (ISUP) Initial Address Message (IAM) that is intended, at least in part, to communicate or coordinate voice-grade link selection with the tandem switching office **110.** Such an ISUP IAM message is typically transported via a Signaling System 7 (SS7) signaling link to STP **112.** STP **112** receives the message, examines the message routing label or address header information contained therein, and simply routes the message to the specified destination address which, in this case, corresponds to tandem switching office **110.** Using the voice-grade link selection information contained within the ISUP IAM message, tandem switching office **110** is able to reserve the specified link, and consequently a voice-grade communication path is established between SSP **106** and tandem switching office **110.** In a similar manner, ISUP messages are transmitted and received by tandem switching office **110**, STP **112**, and SSP **108** such that a voice-grade communication path is also established between tandem switching office **110** and the terminating SSP **108.** Once all of the necessary voice-grade links have been acquired and placed in service, call setup is considered complete and calling party **102** is able to engage in speech-type communication with the called party **104.**

While the simplified network shown in Figure 1 is indicative of the function and service traditionally provided by the Public Switched Telephone Network (PSTN), the present network increasingly carries data, including communications to and from the Internet or World Wide Web (WWW). Furthermore, as the overall performance and reliability of the Internet has improved, so has the incentive to make use of the Internet for the purposes of communicating voice-type calls.

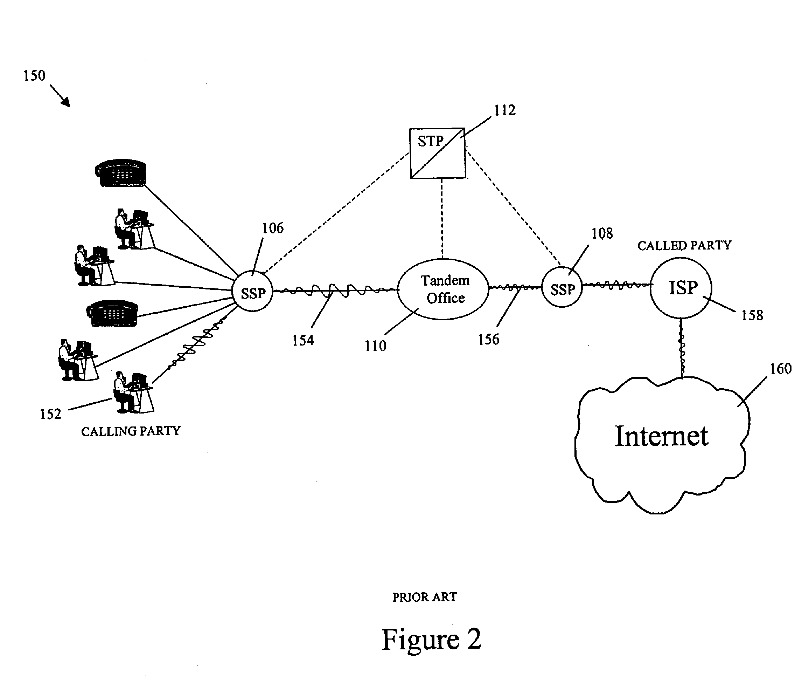

Figure 2 illustrates one of the most common call flow pathways associated with such "Internet calls", as described above. More particularly, Figure 2 includes a communication network generally indicated by the numeral **150.** Network **150** is further comprised of both a calling party **152** and a called party ISP **158.** Calling party **152** is communicatively coupled to the originating EO or SSP 106, while called party ISP **158** is similarly connected to the terminating EO or SSP **108.** Originating SSP 106 and terminating SSP **108** are, in turn, connected via voice-grade communication trunks or links **154** and **156,** respectively, to a tandem switching office **110.** SSP **106,** SSP **108** and tandem switching office **110** are also connected via signaling-grade links to the STP **112.**

As previously discussed, call setup is effected between the involved network elements through the use of an appropriate sequence of SS7 signaling messages. In the example shown in Figure 2, it will be appreciated that although the call is not voice-related the communication links that are allocated and effectively comprise the call pathway are voice-grade links **154** and **156.** More particularly, in order for calling party **152** to obtain access to the data network **160,** a telephony service provider must employ or utilize some portion of their available voice-grade trunking resources. While functional, such a call scenario is unattractive to telephony service providers for a number of reasons. The two most significant reasons being that expensive, voice-grade trunks are being monopolized to carry data-grade traffic that could otherwise be transported on less expensive data-grade trunks, and that such a scenario creates "convergence" problems at the terminating end office facility, SSP **108.** With particular regard to the "convergence" phenomena, it will be appreciated that at any given time, a plurality of calls to an ISP could be placed by a plurality of calling parties where each calling party is serviced by a different originating End Office or SSP. As such, it is possible that the volume of calls facilitated by any individual originating SSP is relatively light. However, it will be appreciated that the terminating SSP which is servicing the called party ISP is required to simultaneously handle or make available sufficient voice-grade trunking to accommodate all of the calls placed by the calling parties. As such, call related traffic is said to "converge" at the terminating SSP that is servicing the called party ISP. Thus, in general, the more Internet service subscribers an ISP is able to recruit, the more severe the terminating SSP or EO convergence problem.

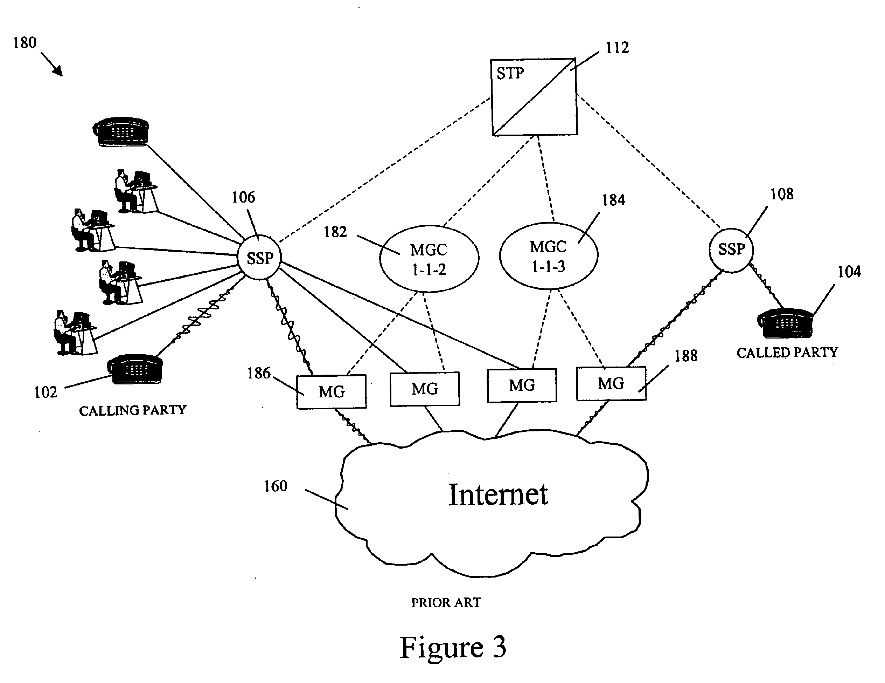

Consequently, there is a significant incentive for telephony service providers to implement new network architectures and equipment that enable both non-voice and voice type calls to be connected or completed via data-grade trunking as opposed to traditional voice-grade trunking. With particular regard to the problem of transporting voice-type traffic through a data network, it will be appreciated that the network architecture illustrated in Figure 3 has been previously proposed and implemented to provide such "voice over IP" call functionality.

Shown in Figure 3 is a communications network generally indicated by the numeral **180** which includes components of traditional PSTN type networks as well as traditional data networks such as the Internet **160.** Furthermore, network **180** includes a collection of inter-networking elements intended to facilitate communication between the PSTN and data network **160.** More specifically, network **180** includes a calling party terminal **102,** and a called party terminal **104.** Calling party **102** is communicatively coupled to an originating SSP **106,** and in a similar manner, called party **104** is communicatively coupled to a terminating SSP **108.** SSPs **106** and **108** are in turn connected to an STP **112** via SS7 signaling links. Those skilled in the art of telephony communications will appreciate that such components are typically incorporated within a traditional PSTN type network.

Also coupled to STP **112** are a pair of Media Gateway Controller (MGC) nodes **182** and **184.** The MGC nodes provide inter-connectivity and inter-networking functionality between PSTN type network components and data network 160. More particularly, MGC **182** is assigned a unique SS7 Point Code (PC) of 1-1-2 and is connected to STP **112** via a dedicated SS7 signaling link. In a similar manner, MGC **184** is assigned a unique PC of 1-1-3 and is coupled to STP **112** via an SS7 communication link. As such, MGC **182** and MGC **184** are adapted to receive, process and respond to SS7 call setup / teardown signaling messages. Further coupled to MGCs **182** and **184** via signaling links are Media Gateways (MGs) **186** and **188,** respectively. It will be appreciated from Figure 3 that each MG element includes at least three communication interfaces. More specifically, MG **186** is adapted to communicate via a data-grade trunk with SSP **106.** MG **186** is also adapted to communicate via a signaling link with MGC **182,** while communicating via a data-grade link with data network **160.** In a similar manner MG **188** is coupled to SSP **108** via a data-grade trunk, to MGC **184** via a signaling link, and to data network **160** via a data-grade link.

As such, MGC **182** is able to signal MG **186** in a manner so as to cause MG **186** to establish a data-grade trunk connection with SSP **106,** thereby providing a SSP **106** with access to data network **160** without requiring the use of any voice-grade circuit or trunk resources. In a similar manner, MGC **184** and MG **188** provide SSP **108** with the same benefits.

It will be appreciated that in a less optimized configuration, the communication trunking between the SSPs (106 and **108)** and the MGs **(186** and **188)** could be voice-grade. While such a configuration constitutes a less optimized solution than an all data-grade trunk pathway, benefits may still be realized by eliminating the use of tandem office connected voice-grade trunks in scenarios that would ordinarily require multiple tandem offices to be involved in the completion of a call.

From an operational perspective, it should be noted that in practice, both data and voice trunks connected to an SSP or End Office are actually comprised of multiple communication channels or pathways which are commonly referred to as communication circuits. Within any given trunk, these individual communication circuits are identified by a parameter known as a Circuit Identification Code (CIC).

In the example shown in Figure 3, the establishment of a "call" involves the selection of a particular circuit in a trunk that directly or indirectly facilitates connection of the calling or originating SSP **106** and called or terminating SSP **108.** For example, if subscriber **102** that is serviced by SSP **106** wishes to place a call to another subscriber **104** that is serviced by SSP **108,** an SS7 signaling message is formulated and sent from SSP **106** via STP **112** to MGC **182.** More specifically, an ISUP IAM message is formulated by SSP 106 indicating that a particular trunk circuit has been selected and reserved for use with the requested call. Within the IAM message, the chosen trunk circuit is indicated by a CIC parameter. The SS7 ISUP IAM message is addressed to the unique SS7 point code associated with MGC **182,** which in this example is 1-1-2.

It should be appreciated that the STP **112** simply receives the ISUP IAM signaling message from SSP **106** and routes the message out the appropriate signaling link to MGC **182** based on the Destination Point Code (DPC) specified in the message. Once again, in this example, the DPC of the ISUP IAM message is 1-1-2.

In general, MGC **182** receives the ISUP IAM message and examines the CIC parameter. Based on the CIC value included in the SS7 signaling message, MGC **182** subsequently signals the MG node that is adapted to communicate with SSP 106 via the specified trunk circuit. In this example, the ISUP IAM message is assumed to specify a CIC value that is representative of a trunk circuit maintained by MG **186.** Consequently, after receiving the ISUP IAM message, MGC **182** further sends a signaling message to MG **186** so as to generally instruct MG **186** to reserve the trunk circuit requested by SSP **106.**

In a similar manner, SS7 ISUP messages are also between MGC **182**, MGC **184**, and terminating SSP **108** so as to effectively establish a call pathway between the calling party **102** and called party **104.** In this case, the calling pathway includes, at least in part, a data network component and furthermore does not require an Internet Service Provider (ISP) to provide access to this data network component.

While the network architecture described above offers numerous benefits over previous "Internet call" processing implementations, one significant limitation of such an architecture involves the requirement that each MGC node be assigned a unique SS7 network address or point code (PC). With the rapid expansion of the PSTN, SS7 point codes have become a scarce resource. Consequently, it is not always feasible for a telephone network operator to implement new network architectures or network growth plans that require the acquisition of numerous new SS7 point codes.

Document WO 97/46045 describes a telecommunication system with a connection processing system. Connection identifiers are assigned to indexes and stored in corresponding index latches. When communications arrive over a particular connection, the identifier for the particular connection is provided to all of the index latches. The index latch that stores a matching connection identifier provides its associated index. The index can be used to access a memory location that houses a processing instruction for the particular connection. Said system can be used in ATM multiplexers and gateways to facilitate connection processing.

The IETF-Article "SS7-intemet interworking - architectural framework" of Fernando Cuervo et al., XP-002171309, July 1998 shows an architectural framework for SS7-intemet interworking, on to which existing protocols and future protocols in this space can be mapped. Dial-up internet access, Voice over IP transit, and transport of SS7 signaling over IP are included.

Document WO 99/16256 describes a method and an apparatus for dynamically routing calls in an intelligent network. That method leverages the resident switching power in the public switched telephone network by departing from the advanced intelligent network call model while adhering to the basic principles of ISUP common channel signaling to introduce new flexibility in call routing.

Therefore, what is needed is a system and method of establishing calls, at least in part, through a data network using inter-networking nodes that do not require unique SS7 point codes.

### Disclosure of the Invention

According to one aspect, the present invention includes a communications network element that is capable of generally routing messages based at least in part on a Circuit Identification Code (CIC) parameter that is specified within the signaling message to a Media Gateway Controller (MGC). More particularly, the communications network element, referred to herein as a Circuit Identification Code (CIC) routing node, is capable of receiving an SS7 message via an SS7 signaling link from another node connected to an SS7 signaling network. The CIC routing node is adapted to make a routing decision that is based, at least in part, on the value of a CIC parameter specified in the SS7 message. The CIC routing node is further adapted to encapsulate the routed message in an Internet Protocol (IP) envelope and transmit the encapsulated SS7 message over an IP communication link to a predetermined MGC node. The CIC routing node includes a communication module or modules capable of transmitting and receiving data packets over both SS7 and IP networks. A message routing process implemented in hardware or software examines Originating Point Code (OPC), Destination Point Code (DPC), and Circuit Identification Code (CIC) values contained in incoming ISUP IAM data packets and subsequently directs these packets to the appropriate outbound communication link for transmission to the appropriate MGC. As the routing key employed for ISUP IAM messages in the CIC routing node is a triplet (OPC, DPC, CIC), each MGC is not required to have a unique SS7 point code, instead each MGC is represented by a unique combination of sending node address (OPC), self-address (DPC), and trunk circuits serviced (CIC).

The functions for providing CIC based routing decisions are described herein as modules or processes. It is understood that these modules or processes may be implemented as computer-executable instructions embodied in a computer-readable medium. Alternatively, the modules or processes described herein may be implemented entirely in hardware. In yet another alternative embodiment, the modules or processes described herein may be implemented as a combination of hardware and software.

The processes and modules for providing CIC based routing decisions are described below as being associated with cards or subsystems within a routing node. It is understood that these cards or subsystems include hardware for storing and executing the processes and modules. For example, each card or subsystems described below may include one or more microprocessors, such as an x86 microprocessor available from Intel Corp., and associated memory.

Accordingly, it is an object of the present invention to provide a routing node that facilitates the routing of messages to a plurality of network elements that share a common point code address.

It is yet another object of the present invention to provide a routing node that routes incoming messages based, at least in part, on a Circuit Identification Code (CIC) value contained within the message.

It is yet another object of the present invention to provide a method of routing messages based, at least in part, on a Circuit Identification Code (CIC) value contained within the message.

It is yet another object of the present invention to provide a routing node that facilitates the setting up and tearing down of voice-type calls across a data network such as the Internet.

It is yet another object of the present invention to provide a routing node that is capable of generating usage and measurements data and billing data associated with a message that is routed based, at least in part, on a CIC value contained within the message.

Some of the objects of the invention having been stated hereinabove, other objects will become evident as the description proceeds, when taken in connection with the accompanying drawings as best described hereinbelow.

At least of the above mentioned objects is solved by means of a network element according to claim 22 and/or by means of a method according to claim 1.

### Brief Description of the Drawings

A description of embodiments of the present invention will now proceed with reference to the accompanying drawings, of which:
Figure 1 is a prior art network diagram representation of a typical voice-type telephone call in the public switched telephone network (PSTN);
Figure 2 is a prior art network diagram of a data or Internet-type telephone call in the PSTN using an Internet Service Provider (ISP) to provide access to a data network;
Figure 3 is a prior art network diagram of a data or Internet-type telephone call in the PSTN using a Media Gateway Controller (MGC) to provide access to a data network;
Figure 4 is a functional block diagram of a system architecture according to a preferred embodiment of a Circuit Identification Code (CIC) packet routing node of the present invention;
Figure 5 is a schematic and message flow diagram of a system architecture according to a preferred embodiment of a CIC packet routing node of the present invention, generally indicating message flow associated with an incoming ISDN User Part (ISUP) Initial Address Message (IAM) message;
Figure 6 is a flow chart diagram illustrating an implementation of CIC based routing decision processing of an ISUP IAM message according to an embodiment of a CIC packet routing node of the present invention;
Figure 7 is a table that illustrates a sample CIC Routing Database (CRD) structure and data used in a preferred embodiment of a CIC packet routing node of the present invention;
Figure 8 is a diagram that illustrates a typical message structure associated with a Signaling System 7 (SS7) ISUP IAM message;
Figure 9 is a network diagram illustrating an embodiment of the present invention where multiple MGC nodes each are assigned the same SS7 network address point code;
Figure 10 is a network diagram illustrating SS7 ISUP IAM message flows associated with an embodiment of the present invention where multiple MGC nodes each are assigned the same Signaling System 7 (SS7) network address point code; and
Figure 11 is a schematic diagram of a system architecture according to another embodiment of a CIC packet routing node of the present invention, generally illustrating an integrated CIC based accounting subsystem.

### Detailed Description of the Invention

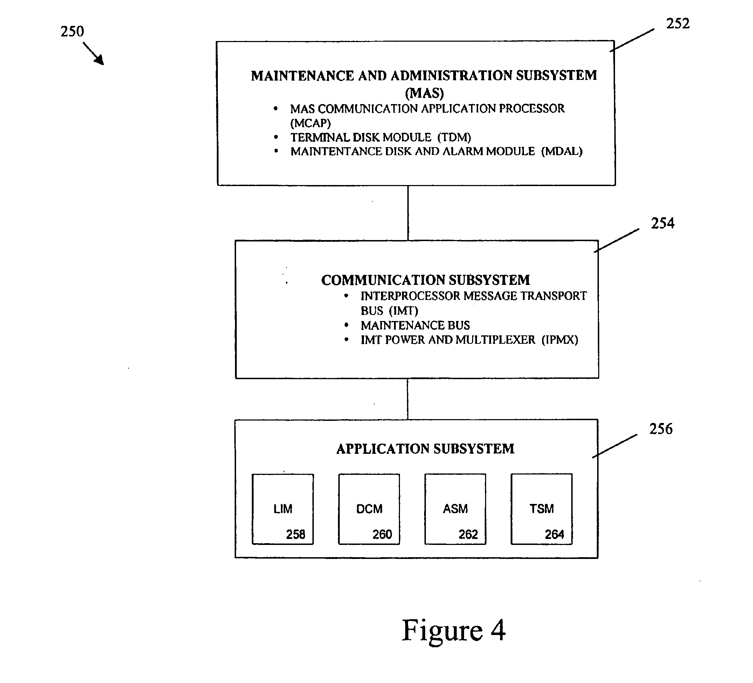

Disclosed herein are several embodiments of the present invention, all of which include a network element that performs functions similar to that of a traditional telecommunications network packet routing switch, such as a Signal Transfer Point (STP). Each of the embodiments described and discussed below, employs an internal architecture similar to that of high performance STP and signaling gateway (SG) products which are marketed by the assignee of the present application as the Eagle® STP and IP⁷ Secure Gateway^{tm}, respectively. A block diagram that generally illustrates the base internal architecture of the IP⁷ Secure Gateway^{tm} product is shown in Figure 4. A detailed description of the Eagle® STP may be found in the *Eagle*^{*®*} *Feature Guide* PN/910-1225-01, Rev. B, January 1998, published by Tekelec, Inc. of Calabasas, California, the disclosure of which is incorporated herein by reference in its entirety. Similarly, a detailed description of the IP⁷ Secure Gateway^{tm} may be found in Tekelec publication PN/909-0767-01, Rev B, August 1999, titled *Feature Notice IP*^{*7*} *Secure Gateway*^{tm} *Release 1.0,* the disclosure of which is hereby incorporated by reference. The specific functional components of an IP⁷ Secure Gateway^{tm} for transmitting and receiving TCAP messages over an Internet Protocol (IP) network are described in commonly-assigned, co-pending U.S. Patent Application No. 09/205,809, the disclosure of which is incorporated herein by reference in its entirety. As described in the above referenced *Eagle*^{*®*} *Feature Guide,* an Eagle® STP **250** includes the following subsystems: a Maintenance and Administration Subsystem (MAS) **252**, a communication subsystem 254 and an application subsystem **256**. The MAS **252** provides maintenance communications, initial program load, peripheral services, alarm processing and system disks. The communication subsystem **254** includes an Interprocessor Message Transport (IMT) bus that is the main communication bus among all subsystems in the Eagle® STP **250.** This high-speed communications system functions as two 125 Mbps counterrotating serial buses.

The application subsystem **256** includes application cards that are capable of communicating with the other cards through the IMT buses. Numerous types of application cards can be incorporated into STP **250,** including but not limited to: a Link Interface Module (LIM) **258** that provides SS7 links and X.25 links, a Data Communication Module (DCM) 260 that provides an Internet Protocol (IP) interface using Transmission Control Protocol (TCP), and an Application Service Module (ASM) 262 that provides global title translation, gateway screening and other services. A Translation Service Module (TSM) **264** may also be provided to support triggered local number portability service. Once again, a detailed description of the Eagle® STP is provided in the above-cited *Eagle*^{*®*} *Feature Guide* and need not be described in detail herein. It should also be appreciated that, in addition to conventional SS7 LIM cards, a Data Communication Module (DCM) can be employed in a similar manner to provide for the transport of Internet Protocol (IP) encapsulated SS7 messages over an IP network, as described in the above referenced *Feature Notice IP*^{*7*} *Secure Gateway*^{tm} *Release 1.0* publication. With particular regard to the TSM triggered LNP services module mentioned above, a detailed description of the Tekelec triggered LNP solution may be found in the *Feature Guide LNP LSMS* PN/910-1598-01, Rev. A, January 1998, published by Tekelec, the disclosure of which is hereby incorporated herein by reference. Furthermore, systems and methods for providing triggerless LNP functionality within a network routing node are described in commonly-assigned, co-pending U.S. Patent Application No. 09/053,541, the disclosure of which is incorporated herein by reference in its entirety.

### CIC Routing Node Embodiment

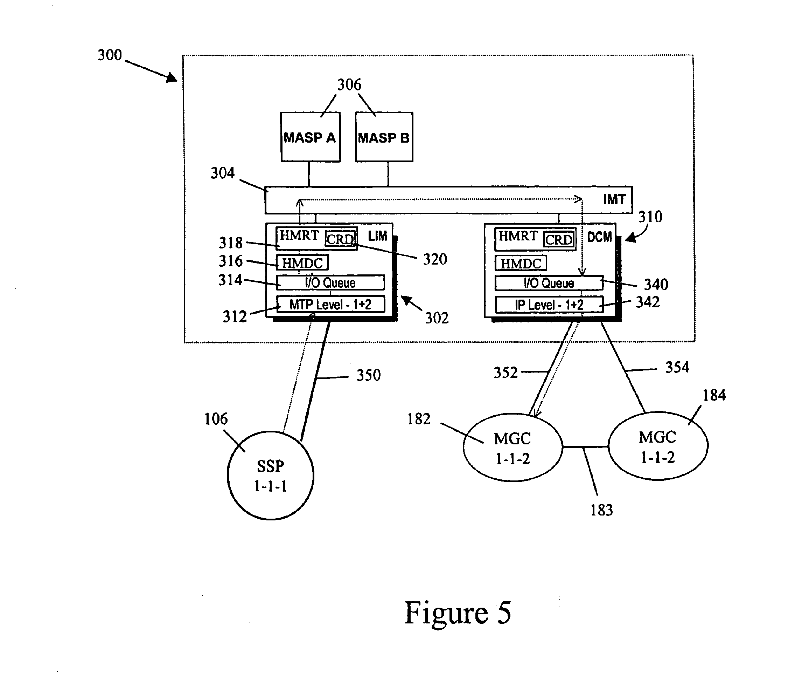

Shown in Figure 5 is Circuit Identification Code (CIC) packet routing switch of the present invention that is generally indicated by the numeral **300.** It will be appreciated that CIC routing node **300** is communicatively coupled to an EO or SSP **106** via an SS7 signaling link **350,** to a first Media Gateway Controller (MGC) node **182** via an IP connection **352,** and to a second Media Gateway Controller (MGC) node **184** via an IP connection **354.** MGC nodes **182** and **184** are also communicatively coupled together via an IP link **183.** It will be further appreciated that the MGC nodes **182** and **184** have an identical SS7 network address or point code, 1-1-2. Once again, those skilled in the art of telecommunication network communications will appreciate that the assignment of identical SS7 point codes to two nodes operating within the network is typically not possible. It is the CIC routing node of the present invention that directly facilitates such SS7 point code consolidation within a network, and the means by which this functionality is achieved is discussed in detail below.

As further illustrated in Figure 5, CIC packet routing node 300 includes a high speed Interprocessor Message Transport (IMT) communications bus **304.** Communicatively coupled to IMT bus **304** are a number of distributed processing modules or cards including: a pair of Maintenance and Administration Subsystem Processors (MASPs) **306,** an SS7 capable Link Interface Module (LIM) **302,** and an Internet Protocol (IP) capable Data Communication Module (DCM) **310.** These modules are physically connected to the IMT bus **304** such that signaling and other type messages may be routed internally between all active cards or modules. For simplicity of illustration, only a single LIM **302** and DCM **310** are included in Figure 5. However, it should be appreciated that the distributed, multiprocessor architecture of the CIC routing node **300** facilitates the deployment of multiple LIM, DCM and other cards, all of which could be simultaneously connected to and communicating via IMT bus **304.**

MASP pair **306** implement the maintenance and administration subsystem functions described above. As the MASP pair **306** are not particularly relevant to a discussion of the flexible routing attributes of the present invention, a detailed discussion of their function is not provided herein. For a comprehensive discussion of additional MASP operations and functionality, the above-referenced Tekelec publications can be consulted.

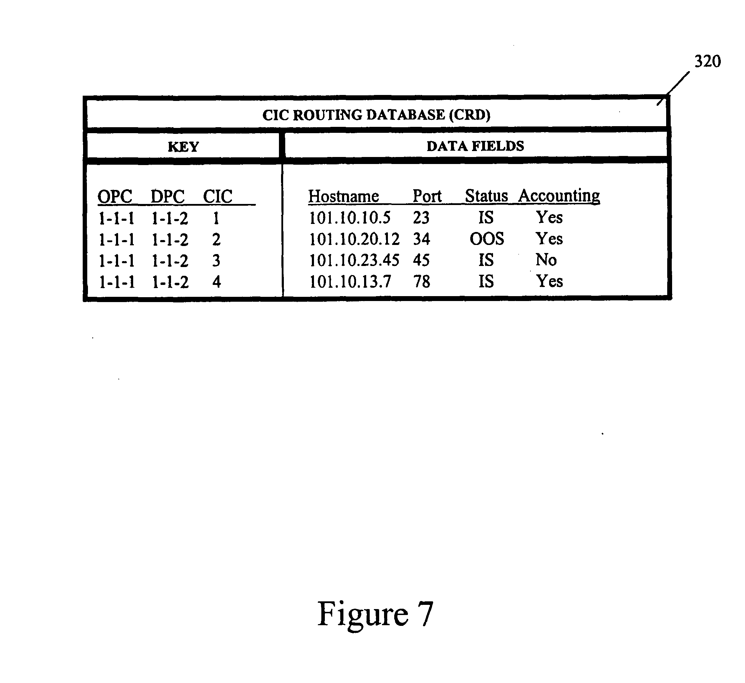

Focusing now on LIM card functionality, it will be appreciated that LIM **302** is comprised of a number of sub-component processes including, but not limited to; SS7 MTP level 1 & 2 processes **312,** an I/O buffer or queue **314,** an SS7 MTP level 3 layer HMDC process **316,** and an HMRT process **318.** HMRT process **318** is generally responsible for examining an incoming message and determining to which LIM or DCM the message should be delivered for subsequent outbound transmission. Consequently, HMRT process **318** includes a CIC Routing Database (CRD) **320** that generally includes information essential to the routing of ISUP IAM messages that are destined for a MGC or similar type network element. In the particular embodiment described herein, CRD **320** employs a triplet key field structure that includes Originating Point Code (OPC), Destination Point Code (DPC), and Circuit Identification Code (CIC) as indicated in Figure 7. Furthermore, the CRD **320** may contain a number of data fields including, but not limited to, an Internet Protocol (IP) Hostname, an IP Port, a target node Status, and an Accounting subsystem indicator. CRD database **320** could also contain information related to MGC node ownership and, consequently, message routing decisions can be based, at least in part, upon MGC node ownership.

It will be appreciated that, in the particular embodiment described herein, the HMRT process **318** is configured such that the CRD process **320** is preferably only accessed in response to the receipt of an ISUP IAM message. Consequently, in response to receiving an ISUP IAM message that is destined for an MGC or similar node, a lookup would be performed in CRD process **320** and the resulting information returned by the CRD **320** would be used to further route the message. If an ISUP IAM message that was not destined for an MGC or similar node were received, a lookup in CRD process **320** might be performed but no matching entry would be found. In such a case, standard or conventional routing of the message would be performed in a manner similar to that described in the above referenced Eagle® STP and IP⁷ Secure Gateway^{tm} documents. In much the same manner, all non ISUP IAM messages received by the CIC routing node of the present invention would be routed using the techniques and processes described in the above referenced Eagle® STP and IP⁷ Secure Gateway^{tm} documents. As such, a detailed discussion of the standard or conventional message routing techniques and processes employed by the Eagle® STP and IP⁷ Secure Gateway^{tm} will not be discussed in detail herein.

It will be further appreciated that the routing information contained in CRD process **320** could be spread among several intermediate tables, while still achieving the same routing objectives. For instance, in one embodiment, the CIC routing information could be split into two CIC routing tables. The first CIC routing table could contain the key lookup fields (OPC, DPC, CIC), and associated with each key triplet could be an internal address corresponding to the outbound LIM or DCM card. In such a scenario, the first CIC routing table could be located within the HMRT process on the inbound LIM or DCM card. The information contained within this first CIC routing table would be used to direct an incoming message to the appropriate outbound LIM or DCM card on the IMT bus. The second CIC routing table would be located on the outbound LIM or DCM card and could again contain the key lookup fields (OPC, DPC, CIC), in addition to IP Hostname, IP Port, Status, and Accounting subsystem indicator information. In such a scenario, the second CIC routing table would appear very similar in form to the CRD structure shown in Figure 7. Once again, the important consideration with regard to the present invention is not the specific implementation of the CRD database, but rather the fact that incoming messages are routed to a specific destination based on OPC, DPC, and CIC parameters contained therein.

With further regard to the routing key used the CIC routing node to determine the actual destination MGC node, it will be appreciated by those skilled in the art of telecommunication network communications that in the case where all MGC nodes coupled to a CIC routing node control MG nodes that are connected to a single SSP, the routing key employed by the CIC routing node could be comprised of only DPC and CIC values. In such a case, an OPC value is not required to uniquely identify the appropriate destination MGC node.

MTP level 1 and 2 process **312** provides the facilities necessary to send and receive digital data over a particular physical media / physical interface, as well as to provide error detection / correction and sequenced delivery of all SS7 message packets. I/O queue **314** provides for temporary buffering of incoming and outgoing signaling message packets. MTP level 3 HMDC process **316** receives signaling messages from the lower processing layers and performs a discrimination function, effectively determining whether an incoming SS7 message packet requires internal processing or is simply to be through switched. As discussed in detail above, the HMRT process **318** and associated CRD process **320** determine to which MGC node a particular ISUP IAM message should be routed based on the OPC, DPC, and CIC parameters contained therein, and more particularly to which outbound LIM or DCM card the message must be internally routed in order to reach the target MGC node. Once again, it should be appreciated that a LIM card may contain more functional processes than those described above. The above discussion is limited to LIM functionality associated with the basic processing of in-bound signaling messages.

DCM **310,** shown in Figure 5, generally includes an I/O buffer or queue **340** and an IP level 1 & 2 process **342.** It will be appreciated that outgoing message packets routed through the DCM **310** will be transmitted out of the CIC routing node 300 and on to Media Gateway Controller (MGC) **182** via IP communication link **352.** As the SS7 and IP communication protocols are not inherently compatible, all SS7 message packets that are to be sent over the IP link **352** are first encapsulated within a TCP/IP routing envelope prior to transmission. This IP encapsulation is performed on the DCM **310** by the IP level 1 & 2 process **342.** Preferred packet formats for encapsulating various types of SS7 messages in IP packets are described in Internet Engineering Task Force (IETF) INTERNET DRAFT entitled Transport Adapter Layer Interface, May 28, 1999, the disclosure of which is incorporated herein by reference in its entirety. Furthermore, a Tekelec Transport Adapter Layer Interface (TALI^{tm}) is described in commonly-assigned, co-pending U.S. Patent Application No. 60/137,988, the disclosure of which is incorporated herein by reference in its entirety.

Once again, the description of LIM and DCM sub-components provided above is limited to those sub-components that are relevant to the sample implementation scenarios illustrated herein. For a comprehensive discussion of additional LIM and DCM operations and functionality, the above-referenced Tekelec publications can be consulted.

In the embodiment shown in Figure 5, the CRD process **320** resides in one or more blocks of high speed random access memory (RAM) that are located on the LIM and DCM cards **302** and **310,** respectively. However, it will be appreciated by those skilled in the art of high-performance computing systems that such a software process and any databases associated therewith could be configured such that some or all of the information is stored on a high density, fast access physical storage media such as magnetic or optical discs.

### CIC Based Routing Process

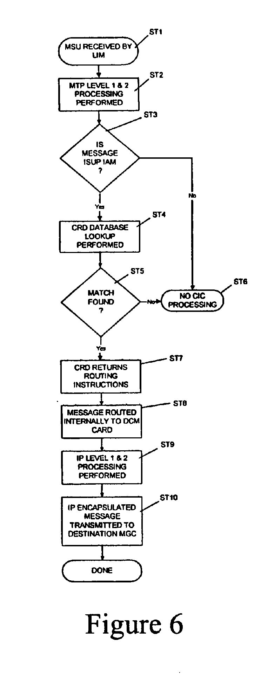

For purposes of illustration, the path of a typical MGC-bound SS7 ISUP IAM message requiring CIC routing node service is traced in Figure 5 from reception at the CIC routing node **300** by the inbound LIM **302,** through processing by LIM-based HMRT process **318,** and on to the outbound DCM **310.** A detailed flow chart of CIC related ISUP IAM message processing steps is presented in Figure 6, and may be used in conjunction with the schematic diagram shown in Figure 5 to better understand CIC processing methodology.

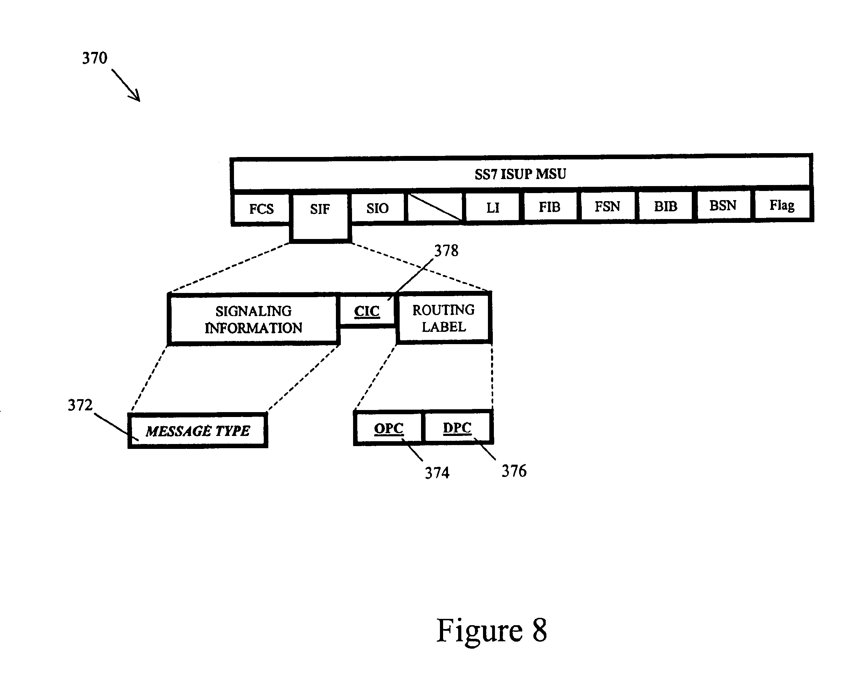

Beginning with step **ST1** in Figure 6,an incoming ISUP IAM message is received at the inbound LIM module **302.** For the purposes of illustration, it should be assumed that the ISUP IAM message includes an OPC value of 1-1-1, a DPC value of 1-1-2, and a CIC value of 3. In step **ST2,** the incoming ISUP IAM message is received and processed by the MTP Level 1 and 2 process **312.** With MTP Level 1 and 2 processing complete, the signaling message packet is temporarily buffered in the I/O queue **314** before being passed up the stack to the MTP Level 3 HMDC process **316,** where SCCP type discrimination processing is performed. In the example shown in Figure 5, HMDC process **316** examines the message packet routing label and determines that the DPC of the packet is the PC (1-1-2) of the MGC node **182,** and subsequently passes the message packet to HMRT process **318** for further processing. HMRT process **318** receives the packet and subsequently examines a number of fields or parameters contained within the message. Shown in Figure 8 is the structure of a typical ISUP IAM message, generally indicated by the numeral **370.** HMRT process **318** first examines a message type parameter **372** in order to determine whether the received message is an ISUP IAM type message **(ST3).** If, through examination of the message type parameter **372,** HMRT process **318** determines that the received message is an ISUP IAM message, then HMRT process **318** next extracts an Originating Point Code (OPC) parameter **374,** a Destination Point Code (DPC) parameter **376,** and a Circuit Identification Code (CIC) parameter **378** from the received message. Once again, in the example presented herein, the OPC parameter has a value of 1-1-1, the DPC parameter has a value of 1-1-2, and the CIC parameter has a value of 3. Using the OPC, DPC, and CIC values extracted from the received message, HMRT process **318** performs a lookup in the CRD process **320 (ST4).** If an entry is located within the CRD database process **320** corresponding to the received message OPC, DPC, and CIC values, stored data associated with the OPC-DPC-CIC key is returned by the CRD process **320 (ST7).** Once again, as indicated in Figure 7, such stored data might include, but is not limited to: a destination node IP Hostname value, which in the illustrated embodiment comprises an IP address; a destination node TCP or UDP Port value; a destination node Status indicator; and a destination node Accounting or Billing subsystem indicator. In an alternative embodiment, Hostname field may include a host domain name, rather than an IP address. In addition, although the Hostname field in the illustrated embodiment contains 32-bit lPv4 addresses for the destination nodes, the present invention is not limited to IPv4 addresses. For example, in an alternative embodiment the Hostname field may contain 128-bit lPv6 addresses.

It will be appreciated, in the event that the received message is not an ISUP IAM message or that there is no entry included within the CRD database corresponding to the received message OPC, DPC, and CIC values, no further CIC based routing is performed on the message **(ST6).** As discussed above, under such conditions, the message is simply routed using standard or conventional SS7 routing techniques as described in the above referenced Eagle® STP and IP⁷ Secure Gateway^{tm} documents.

In the example presented herein, the CRD database lookup locates a match and the information returned by the CRD database process **320** is used, at least in part, to determine a network address associated with a target or destination MGC node **(ST5).** Referring again to Figure 7, it will be appreciated that the matching entry in the CRD database **320** (OPC: 1-1-1, DPC: 1-1-2, CIC: 3) returns an IP node address comprising an IP Address of 101.10.23.45 and a Port number of 45. In the example scenarios presented herein, the destination MGC node is assumed to be connected to a CIC routing node of the present invention via a TCP/IP based communication pathway. However, it should be appreciated that the present invention is not limited in scope to the use of such TCP/IP protocol based communication links. In general, the present invention could be implemented using any number of packet network communication protocols. In any event, once the network address of the destination MGC node is returned by CRD process **320,** the message can be internally routed to the appropriate outbound LIM or DCM card **(ST8).** In the particular example shown in Figure 5, the appropriate outbound link card is DCM **310** or, in other words, DCM **310** is configured so as to generally facilitate communications with the node corresponding to the IP Address 101.10.23.45 and the Port Number 45. Consequently, the message packet is internally routed across the IMT bus **304** to DCM **310,** where it is received by the I/O queue process **340.** Eventually, the modified message packet is passed from the I/O queue **340** on to the IP Level 2 and Level 1 process **342** where properly formatted IP routing label information is applied to the packet prior to transmission across IP link **352 (ST9).** Once again, it should be appreciated that the above referenced IP routing label information corresponds, at least in part, to the network address returned by the CRD database lookup operation. Following successful IP Level 1 & 2 processing, the message packet is transmitted via IP link **352** to the destination MGC node **182 (ST10).**

### CIC Routing Node And Call Setup Messaging

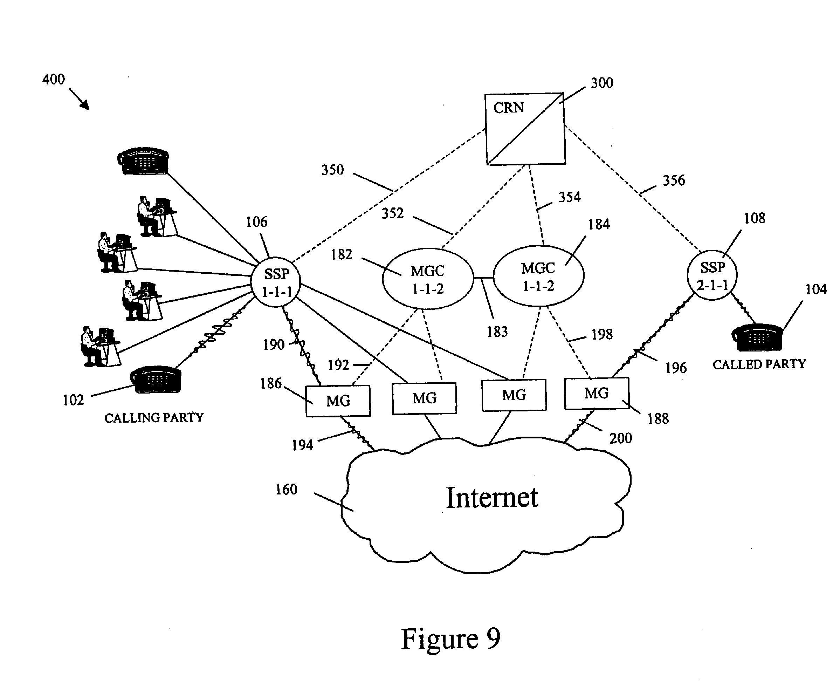

Shown in Figure 9 is a typical network implementation of a CIC routing node of the present invention. As such, Figure 9 includes a communications network, generally indicated by the numeral **400.** Communications network **400** includes both SS7 based signaling facilities as well as equipment and facilities necessary for transmitting voice communications over a data-type network, as opposed to a traditional voice-type network. More particularly, network **400** includes a calling party **102,** a called party **104,** an originating End Office (EO) or Service Switching Point (SSP) **106,** a terminating EO or SSP **108,** and CIC routing node **300.** Originating SSP **106** is communicatively coupled to calling party **102,** and is also coupled via an SS7 communication link **350** to CIC routing node **300.** In a similar manner, terminating SSP **108** is communicatively coupled to called party **104,** and further coupled via an SS7 communication link **356** to CIC routing node **300.** As such, SS7 signaling messages can be communicated between SSP **106,** CIC routing node **300,** and SSP **108** via dedicated SS7 signaling links.

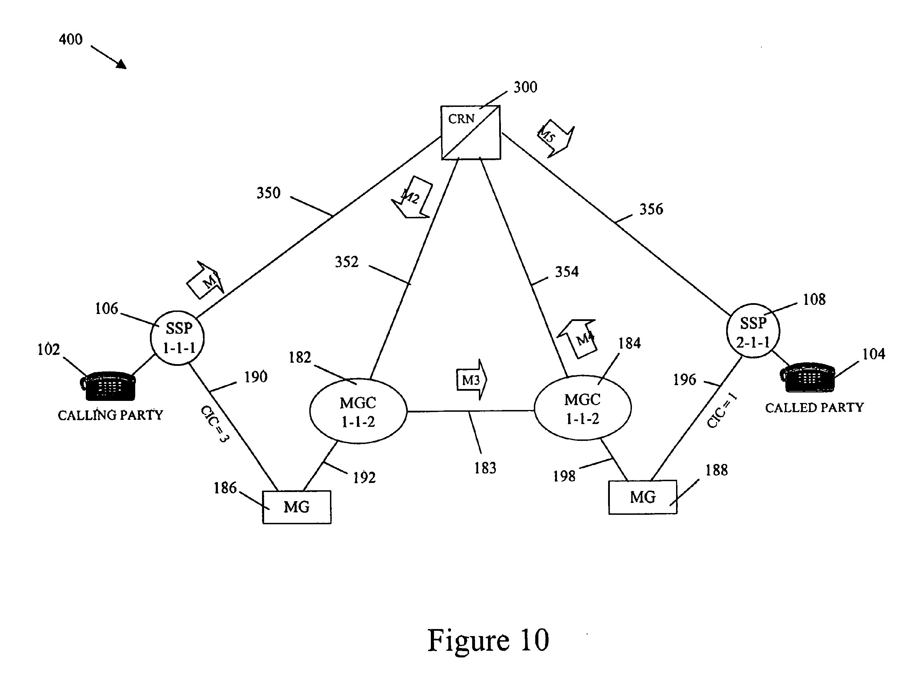

Network **400** also includes a first Media Gateway Controller (MGC) node **182** which is connected to CIC routing node 300 via an IP connection **352,** and a second Media Gateway Controller (MGC) node **184** which is also connected to CIC routing node **300** via an IP connection **354.** Furthermore, MGC nodes **182** and **184** are communicatively coupled via a communication link **183.** With particular regard to communication link **183,** those skilled in the art of communication networking will appreciate that a Local Area Network (LAN) or Wide Area Network (WAN) could provide the same communication functionality as the discrete link **183** shown in Figures 9 and 10. Once again, it will be appreciated that MGC nodes **182** and **184** have an identical SS7 network address or point code, 1-1-2, and that the assignment of identical SS7 point codes to two nodes operating within the network is typically not possible. It is the CIC routing node of the present invention that directly facilitates such SS7 point code consolidation within a network, and the technique by which this functionality is achieved is discussed in detail below.

Further connected to each of the Media Gateway Controller (MGC) nodes **182** and **184** is a plurality of Media Gateway (MG) nodes. As indicated in Figure 9, one of the MGs connected to MGC **182** via a communication link **192** is MG node **186.** MG **186** is further communicatively coupled to originating SSP **106** via a data-grade communication trunk **190.** In a similar manner, MG node **188** is connected to MGC **184** via a communication link **198** and simultaneously to terminating SSP **108** via a data-grade communication trunk **196.** Each of the MG nodes **186** and **188** is also communicatively coupled to data network **160** via data links **194** and **200,** respectively. It will be appreciated that data network **160** is comprised of a number of data network components that collectively provide the functionality associated with such a network, and more specifically provide a reliable communications pathway for messages sent between MG **186** and MG **188.** A detailed discussion of such data networks and their components is beyond the scope of this disclosure and consequently will not be discussed in detail herein.

Generally illustrated in Figure 9 is a voice-type call that employs data-grade communication trunks and a data network, such as the Internet, to facilitate the call. Such a call completion scenario is similar to that previously described in Figure 3, with the key exception of the use of a single SS7 point code to represent both MGC nodes, **182** and **184.** Once again, the ability to add multiple MGC-type nodes to a network without requiring a different, unique SS7 point code for each added MGC-type node represents a major operational benefit for network operators. As discussed above, such is the case because there are a finite number of SS7 network point codes available for use by all network operators that deploy SS7 networks. At present, the acquisition of new SS7 point codes represents a significant problem for network operators attempting to expand their networks by deploying additional service nodes, such as MGC-type nodes.

It will be appreciated that in the call completion scenario shown in Figure 9, communication pathways or segments are established between calling party **102** and originating SSP **106,** between SSP **106** and MG **186,** between MG **186** and data network **160,** between data network **160** and MG **188,** between MG **188** and terminating SSP **108,** and between and SSP **108** and called party **104.** In such a manner, a voice-type communication pathway is effectively formed between calling and called parties **102** and **104,** respectively.

Shown in Figure 10 is the portion of the communication network **400** that is involved specifically with the setup of the voice-type call scenario presented in Figure 9. Figure 10 further illustrates the basic SS7 ISUP IAM call setup signaling message flows associated with the call scenario shown in Figure 9. As such, it will be appreciated that in response to a call request by calling party **102** (i.e., the dialing of a telephone number associated with called party **104**), originating SSP **106** formulates an SS7 ISUP IAM message **M1** which includes an OPC: 1-1-1, DPC: 1-1-2, and CIC: 3. That is, SSP **106** has reserved circuit 3 in the communication trunk that connects MG **186** and SSP **106,** and notification is being sent to MG **186** to reserve this trunk circuit. ISUP IAM message **M1** is transmitted via SS7 communication link **350** to CIC routing node **300.** In a manner similar to that described above, and generally illustrated in Figure 5, message **M1** is received and examined by CIC routing node **300.** Given that the message **M1** is an ISUP IAM type SS7 signaling message, CIC routing node **300** performs a lookup in a CIC Routing Database (CRD) such as that presented in Figure 7. Using the OPC-DPC-CIC parameter values as a CRD database lookup key, it will be further appreciated from Figure 7 that CIC routing node **300** determines that, of the two MGC nodes corresponding to point code 1-1-2, message **M1** should be routed to MGC **182,** as MGC **182** controls the MG node that services the trunk circuit requested by SSP **106.** As such, it will be appreciated that MGC **182** has been assigned an IP address and port number corresponding to the IP Address value 101.10.23.45 and Port number 45 obtained from the database lookup.

With the determination made by CIC routing node that message **M1** should be routed to MGC **182,** message **M1** is encapsulated in an appropriately addressed IP routing envelope and transmitted via IP communication link **352** to MGC **182** as message M2. As the communication technique employed between MGC **182** and MG **186** is not particularly relevant to the CIC routing node of the present invention, a detailed discussion of such is not presented herein. It should suffice to state that MGC **182** receives message **M2** from CIC routing node **300** and subsequently signals the adjacent MG **186** via communication link **192** such that MG **186** reserves trunk circuit 3, as requested by SSP **106.**

Using information contained within the message M2, MGC **182** next formulates a message M3 which effectively instructs MGC **184** that a trunk circuit connected to terminating SSP **108** needs to be reserved or acquired in order to complete the current call setup process. It should be appreciated that message **M3** is not an SS7 ISUP IAM type message, and consequently does not rely on SS7 addressing point codes with regard to routing. As such, the duplicate nature of the SS7 point codes assigned to both MGC **182** and MGC **184** does not pose a problem. Numerous protocols have been proposed and are currently under consideration for use in such voice-over-data communication schemes, including Session Initiation Protocol (SIP) and H.323 protocols. As the particular communication methods and protocols used to facilitate communication between two such MGC nodes is not particularly relevant to the present invention and is essentially beyond the scope of this disclosure, a detailed discussion of this aspect of the call setup process will not be presented herein.

In any event, it will be appreciated that MGC **184** is notified by message M3 that MG **188** should reserve a trunk circuit connected to SSP **108** for use with the current call attempt. In response, MGC **184** formulates an ISUP IAM message **M4** that includes information regarding the specific trunk circuit reserved (CIC = 1) by MG **188** and the DPC (DPC = 2-1-1) of the terminating SSP **108** that controls the distant end of the selected trunk circuit. In the particular example presented herein, it is assumed that communication link **354** is an IP type link, and as such message **M4** will typically assume the form of an IP encapsulated SS7 ISUP IAM message. It will be appreciated that if link **354** were a dedicated SS7 link, message M4 would not require IP encapsulation. Message **M4** is next transmitted via link **354** to CIC routing node **300.**

As indicated in Figure 10, message M4 is received, de-capsulated and examined by CIC routing node **300.** Given that the message **M4** is an ISUP IAM type SS7 signaling message, CIC routing node **300** first performs a lookup in a CIC Routing Database (CRD) such as that presented in Figure 7. Using the OPC-DPC-CIC parameter values as a CRD database lookup key, it will be appreciated from Figure 7 that no match is found in the CRD database. Consequently, message M4 is routed within CIC routing node **300** using the DPC (2-1-1) specified in the message. Consequently, message M4 is routed onto SS7 link **356** and delivered to SSP **108** as message **M5.** SSP **108** receives the ISUP IAM message **M5** and subsequently uses the CIC information contained in the message to reserve the trunk circuit (CIC = 1) selected by MG **188.**

### CIC Routing Node With Accounting Subsystem

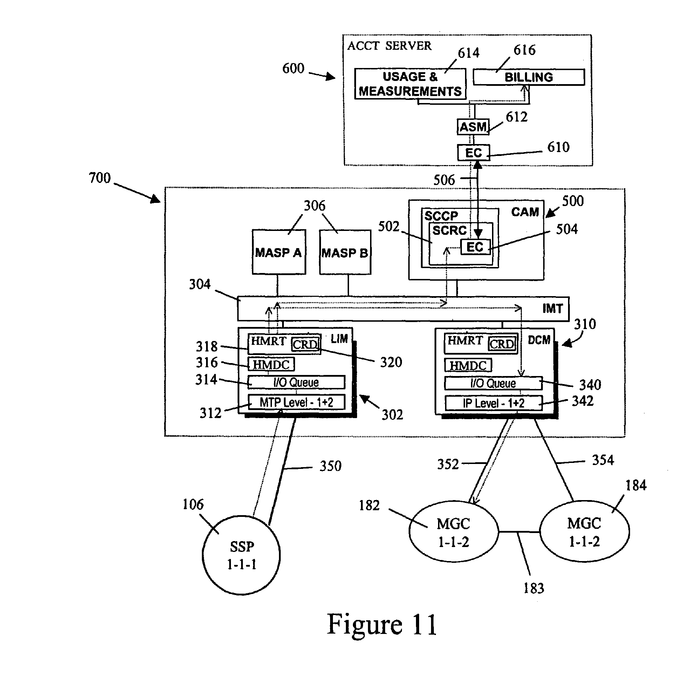

Shown in Figure 11 is an another embodiment of a CIC routing node of the present invention that is provisioned to update and maintain an accounting subsystem based on the number and type of messages routed based on CIC values. Figure 11 includes a CIC routing node, generally indicated by the numeral **700,** that is similar in design and basic function to CIC routing node **300** previously presented in Figure 5.

As with CIC routing node **300** described above, it will be appreciated that CIC routing node **700** is communicatively coupled to an EO or SSP **106** via an SS7 signaling link **350,** to a first Media Gateway Controller (MGC) node **182** via an IP connection **352,** and to a second Media Gateway Controller (MGC) node **184** via an IP connection **354.** MGC nodes **182** and **184** are also communicatively coupled together via an IP link **183.** It will be further appreciated that the MGC nodes **182** and **184** have an identical SS7 network address or point code, 1-1-2.

As further illustrated in Figure 11, CIC packet router node **700** includes a high speed Interprocessor Message Transport (IMT) communications bus **304.** Communicatively coupled to IMT bus **304** are a number of distributed processing modules or cards including; a pair of Maintenance and Administration Subsystem Processors (MASPs) **306,** an SS7 capable Link Interface Module (LIM) **302,** an Internet Protocol (IP) capable Data Communication Module (DCM) **310,** a CIC Accounting Module (CAM) **500,** and an external Accounting Server **600.** These modules are physically connected to the IMT bus **304** such that signaling and other type messages may be routed internally between all active cards or modules. For simplicity of illustration, only a single LIM **302,** DCM **310,** and CAM **500** are included in Figure 11, although multiple cards of each type may be simultaneously provisioned as required.

Focusing on LIM card functionality, it will be appreciated that LIM **302** is comprised of a number of sub-component processes including, but not limited to; SS7 MTP level 1 & 2 processes **312,** an I/O buffer or queue **314,** an SS7 MTP level 3 layer HMDC process **316,** and an HMRT process **318.** HMRT process **318** is generally responsible for examining an incoming message and determining to which LIM or DCM the message should be delivered for subsequent outbound transmission. Consequently, HMRT process **318** includes a CIC Routing Database (CRD) **320** that generally includes information essential to the routing of ISUP IAM messages that are destined for a MGC or similar type network element. Furthermore, in the present embodiment, HMRT process **318** is also responsible directing an SCCP-encapsulated copy of the incoming ISUP IAM to CAM **500** in the event that a CRD database lookup returns an Accounting flag value that indicates the need for accounting of messages destined for a particular MGC or MG node. In the embodiment described herein, CRD **320** employs a triplet key field structure that includes Originating Point Code (OPC), Destination Point Code (DPC), and Circuit Identification Code (CIC) as indicated in Figure 7. Furthermore, the CRD **320** may contain a number of data fields including, but not limited to, an Internet Protocol (IP) Hostname, an IP Port, a target node Status, and an Accounting subsystem indicator. CRD database **320** could also contain information related to MGC node ownership and, consequently, message routing decisions can be based, at least in part, upon MGC node ownership.

Once again, it will be appreciated that, in the particular embodiment described herein, the HMRT process **318** is configured such that the CRD process **320** is only accessed in response to the receipt of an ISUP IAM message. Consequently, in response to receiving an ISUP IAM message that is destined for an MGC or similar node, a lookup would be performed in CRD process 320 and the resulting information returned by the CRD 320 would be used to further route the message. If an ISUP IAM message that was not destined for an MGC or similar node were received, a lookup in CRD process **320** might be performed but no matching entry would be found. In such a case, standard or conventional routing of the message would be performed in a manner similar to that described in the above referenced Eagle® STP and IP⁷ Secure Gateway^{tm} documents. In much the same manner, all non ISUP IAM messages received by the CIC routing node of the present invention would be routed using the techniques and processes described in the above referenced Eagle® STP and IP⁷ Secure Gateway^{tm} documents. As such, a detailed discussion of the standard or conventional message routing techniques and processes employed by the Eagle® STP and IP⁷ Secure Gateway^{tm} will not be discussed in detail herein.

Again, MTP level 1 and 2 layer process **312** provides the facilities necessary to send and receive digital data over a particular physical media / physical interface, as well as to provide error detection / correction and sequenced delivery of all SS7 message packets. I/O queue **314** provides for temporary buffering of incoming and outgoing signaling message packets. MTP level 3 HMDC process **316** receives signaling messages from the lower processing layers and performs a discrimination function, effectively determining whether an incoming SS7 message packet requires internal processing or is simply to be through switched. As discussed in detail above, the HMRT process **318** and associated CRD process **320** determine to which MGC node a particular ISUP IAM message should be routed based on the OPC, DPC, and CIC parameters contained therein, and more particularly to which outbound LIM or DCM card the message must be internally routed in order to reach the target MGC node. Additionally, based on the value of the Accounting flag indicator returned by a CRD database lookup, HMRT process **318** is also responsible for encapsulating a copy of the ISUP IAM message within an SCCP envelope, and delivering this copied message to CAM card **500** via IMT bus **304.** It will be appreciated that a detailed discussion of the ISUP message copy and subsequent SCCP encapsulation techniques are described in commonly-assigned, co-pending U.S. Patent Application No.09/503,541 filed February 14, 2000, the disclosure of which is incorporated herein by reference in its entirety.

DCM **310,** shown in Figure 11, generally includes an I/O buffer or queue **340** and an IP level 1 & 2 process **342.** It will be appreciated that outgoing message packets routed through the DCM **310** will be transmitted out of the CIC routing node **300** and on to Media Gateway Controller (MGC) **182** via IP communication link **352.** As the SS7 and IP communication protocols are not inherently compatible, all SS7 message packets that are to be sent over the IP link **352** are first encapsulated within a TCP/IP routing envelope prior to transmission. This IP encapsulation is performed on the DCM **310** by the IP level 1 & 2 process **342.**

CAM **500,** presented in Figure 11, includes a Service Connection Control Part (SCCP) subsystem controller known as a Signaling Connection Routing Controller (SCRC) process **502,** and an high-speed Ethernet Controller (EC) **504.** The SCRC process **502** is responsible for receiving and discriminating signaling messages at the SCCP level, and for subsequently directing the signaling messages to EC **504** for transport to and processing by the external Accounting Server **600.**

External Accounting Server **600** includes a high-speed Ethernet Controller (EC) **610** which is adapted to communicate with CAM EC **504** via high-speed Ethernet link **506.** Coupled to EC **610** is an Accounting Subsystem Manager (ASM) process **612** that is generally responsible for directing messages from the EC process **610** to the appropriate accounting subsystem process or processes. More particularly, Accounting Server 600 may be provisioned to support any number of applications including, but not limited to, a usage and measurements application **614,** and a billing application **616.** Such a usage and measurements application might collect and maintain data or statistics relevant to message throughput that required CIC based routing service. In a similar manner, billing application **616** might use data similar to that collected by usage and measurements application **614** in order to charge other service providers for CIC based routing services.

As such, an ISUP IAM signaling message destined for an MGC node would be copied and encapsulated within an SCCP wrapper by HMRT process **318** in response to a CRD database lookup that returned an Accounting flag value which indicated accounting subsystem processing was required. As indicated in Figure 11, the SCCP encapsulated copy of the original ISUP IAM message is then internally transported via the IMT bus **304** to CAM card 500. The encapsulated message is received and generally processed SCRC controller process **502** and subsequently directed to high-speed EC process **504** for transport via Ethernet connection **506** to the Accounting Server **600.** The message is received on the Accounting Server platform by the receiving EC process **610.** EC process **610** subsequently delivers the message to the Accounting Subsystem Manager (ASM) process **612** where the message or information contained within the message is used to provide input to some or all of the provisioned accounting applications, such as usage and measurements application **614** and billing application **616.**

Once again, it will be appreciated that regardless of the accounting subsystem application invoked, the message passed to the Accounting Server **600** is simply a copy of the original ISUP IAM message. It should also be appreciated that SCCP type encapsulation of the ISUP IAM message is not essential for operation of the CIC routing node of the present invention, nor is it essential that the entire ISUP IAM message (copy or original) be delivered to the Accounting Server 600. Key or critical information content of the ISUP IAM message could be extracted from the original message and delivered to the Accounting Server in a variety of formats, while achieving the same overall functionality.

Although the embodiment illustrated in Figure 11 includes an external accounting module, the present invention is not limited to such an embodiment. For example, in an alternative embodiment, some or all of the functionality of Accounting Server **600** may be incorporated within CIC routing node **700.**

It will be understood that various details of the invention may be changed without departing from the scope of the invention. Furthermore, the foregoing description is for the purpose of illustration only, and not for the purpose of limitation-the invention being defined by the claims.

## Claims

1. A method for routing a message in a communications network based on Circuit Identification Code (CIC) information contained within the message, the method comprising:
(a) receiving a first signaling message having an SS7 destination point code value (DPC), an SS7 origination point code (OPC) value, and a CIC value from a first network element (106, 182, or 184) in a first communication network;
(b) determining whether the first message is an ISDN User Part (ISUP) message;
(c) in response to determining that the first signaling message is an ISUP message, performing a lookup in a CIC Routing Database (320) (CRD) using at least the CIC value contained in the message;
(d) using routing information returned by the CRD lookup for routing the first signaling message to an appropriate outbound communication link on which the first signaling message may be transmitted; and
(e) transmitting the first signaling message over the outbound communication link to a second network element (106, 182, or 184) in a second communication network.

2. Method of claim 1 wherein routing the first signaling message to the second network element (106, 184, or 184) includes routing the first signaling message to one of a plurality of second network elements in a second communication network that share a DPC value specified in the first signaling message.

3. Method of any one of claims 1 or 2 wherein the first signaling message is a Signaling System 7 (SS7) signaling message.

4. Method of claim 3 wherein the SS7 signaling message is an ISDN User Part (ISUP) message.

5. Method of any one of claims 1-4 wherein the first communication network is an SS7 network and the second communication network is an Internet Protocol (IP) network.

6. Method of any one of claims 1-5 wherein the key information used in the CRD lookup is the combination of DPC and CIC values contained in the first signaling message.

7. Method of claim 6 wherein the key information further includes the OPC value contained in the first signaling message.

8. Method of any one of claims 1-7 wherein the routing information returned by the CIC routing database (320) includes a network address.

9. Method of any one of claims 1-8 wherein the routing information returned by the CIC routing database (320) includes an IP address and a port number.

10. Method of any one of claims 1-9 wherein the routing information returned by the CIC routing database (320) includes a status value that indicates the operational status of the second network element (106, 182, or 184).

11. Method of any one of claims 1-10 further including generating a copy of the first signaling message.

12. Method of claim 11 comprising delivering a copy of the first signaling message to an Accounting Subsystem (600) associated with the CIC routing node.

13. Method of claim 12 wherein delivering a copy of the first signaling message to the Accounting Subsystem (600) comprises encapsulating a copy of the first signaling message in a Signaling Connection Control Part (SCCP) envelope and delivering the encapsulated message to the Accounting Subsystem (600) associated with the CIC routing node.

14. Method of claim 12 wherein the Accounting Subsystem (600) includes a usage measurements application (614).

15. Method of claim 12 wherein the Accounting Subsystem (600) includes a billing application (616).

16. Method of any one of claims 1-15 wherein the first network element (106, 182, or 184) is a Service Switching Point (SSP) (106).

17. Method of any one of claims 1-16 wherein the second network element (106, 182, or 184) is a Media Gateway Controller (MGC) (182 or 184).

18. Method of any one of claims 1-17 wherein routing the first signaling message to the second network includes encapsulating the first signaling message in an IP datagram.

19. Method of any one of claims 1-17 wherein routing the first signaling message to the second network element (106, 182, or 184) includes generating Session Initiation Protocol (SIP) formatted message.

20. Method of any one of claims 1-17 wherein routing the first signaling message to the second network element (106, 182, or 184) includes generating an H.323 formatted message.

21. A computer program product comprising computer-executable instructions embodied in a computer-readable medium for implementing the steps in claim 1.

22. A network element (300) capable of routing a signaling message based at least in part on a Circuit Identification Code (CIC) parameter that is specified within the signaling message, the network element (300) comprising:
(a) a first communication module (302) capable of transmitting messages to and receiving messages from a first communications network;
(b) a second communication module (310) capable of transmitting messages to and receiving messages from a second communications network;
(c) a CIC Routing Database (CRD) (320) that is uniquely keyed or indexed at least in part by CIC values and that contains routing instructions associated with each unique key or index value; and
(d) a message routing process (318) implemented in hardware or software and associated with one of the first and second communication modules (302 or 310) capable of performing a lookup in the CIC routing database (320) based on at least a CIC code extracted from a first signaling message received from a first network element (106, 182, or 184) in the first communication network by one of the first and second communication modules (302 or 310) to locate routing information for the first message and capable of routing the first message to a second network element (106, 182, or 184) in a second communications network.

## Patentansprüche

1. Verfahren zum Routing einer Nachricht in einem Kommunikationsnetzwerk basierend auf einer Circuit Identification Code-(CIC-)Information, welche in der Nachricht enthalten ist, wobei das Verfahren aufweist:
(a) Empfangen einer ersten Signalisierungsnachricht, welche eine SS7-Zielvermittlungsadresse (DPC), einen SS7-Usprungsvermittlungsadresse-(OPC-)Wert und einen CIC-Wert von einem ersten Netzwerkelement (106, 182 oder 184) in einem ersten Kommunikationsnetzwerk aufweist;
(b) Bestimmen, ob die erste Nachricht eine ISDN-Benutzerteil-(ISUP-)Nachricht ist;
(c) in Antwort auf das Bestimmen, dass die erste Signalisierungsnachricht eine ISUP-Nachricht ist, Ausführen eines Suchlaufs in einer CIC-Routing-Datenbank (320) (CRD), wobei wenigstens der CIC-Wert, welcher in der Nachricht enthalten ist, benutzt wird;
(d) Benutzen der Routinginformation, welche von dem CRD-Suchlauf zurückgegeben wird, um die erste Signalisierungsnachricht zu einer geeigneten, außen liegenden Kommunikationsverbindung wegzulenken, auf welcher die erste Signalisierungsnachricht übertragen werden kann;
(e) Übertragen der ersten Signalisierungsnachricht über die außen liegende Kommunikationsverbindung zu einem zweiten Netzwerkelement (106, 182 oder 184) in einem zweiten Kommunikationsnetzwerk.

2. Verfahren nach Anspruch 1, in welchem das Routing der ersten Signalisierungsnachricht zu dem zweiten Netzwerkelement (106, 182 oder 184) das Routing der ersten Signalisierungsnachricht zu einem aus einer Vielzahl von zweiten Netzwerkelementen in einem zweiten Kommunikationsnetzwerk beinhaltet, welches einen DPC-Wert, welcher in der ersten Signalisierungsnachricht spezifiziert ist, gemeinsam hat.

3. Verfahren nach einem der Ansprüche 1 oder 2, in welchem die erste Signalisierungsnachricht eine Signalisierungs- bzw. Zeichengabesystem-7-(SS7-)Signalisierungsnachricht ist.

4. Verfahren nach Anspruch 3, in welchem die SS7-Signalisierungsnachricht eine ISDN-Benutzerteil-(ISUP-)Nachricht ist.

5. Verfahren nach einem der Ansprüche 1 - 4, in welchem das erste Kommunikationsnetzwerk ein SS7-Netzwerk und das zweite Kommunikationsnetzwerk ein Internet-Protokoll-(IP-) Netzwerk ist.

6. Verfahren nach einem der Ansprüche 1 - 5, in welchem die Schlüsselinformation, welche in dem CRD-Suchlauf benutzt wird, die Kombination von DPC- und CIC-Werten ist, welche in der ersten Signalisierungsnachricht enthalten ist.

7. Verfahren nach Anspruch 6, in welchem die Schlüsselinformation ferner den OPC-Wert beinhaltet, welcher in der ersten Signalisierungsnachricht enthalten ist.

8. Verfahren nach einem der Ansprüche 1 - 7, in welchem die Routinginformation, welche durch die CIC-Routing-Datenbank (320) zurückgegeben wird, eine Netzwerkadresse beinhaltet.

9. Verfahren nach einem der Ansprüche 1 - 8, in welchem die Routinginformation, welche durch die CIC-Routing-Datenbank (320) zurückgegeben wird, eine IP-Adresse und eine Port- bzw. Anschlussnummer beinhaltet.

10. Verfahren nach einem der Ansprüche 1 - 9, in welchem die Routinginformation, welche von der CIC-Routing-Datenbank (320) zurückgegeben wird, einen Statuswert beinhaltet, welcher den Betriebszustand des zweiten Netzwerkelementes (106, 182 oder 184) anzeigt.

11. Verfahren nach einem der Ansprüche 1 - 10, welches ferner das Erzeugen einer Kopie der ersten Signalisierungsnachricht beinhaltet.

12. Verfahren nach Anspruch 11, welches das Liefern einer Kopie der ersten Signalisierungsnachricht an ein Abrechnungsuntersystem (600) beinhaltet, welches mit dem CIC-Routingknoten zusammen angeordnet ist.

13. Verfahren nach Anspruch 12, in welchem das Liefern einer Kopie an das Abrechnungsuntersystem (600) das Verkapseln einer Kopie der ersten Signalisierungsnachricht in eine Signalling Connection Control Part- bzw. Signalisierungsverbindungs- und Steuerteil-(SCCP-) Rahmenstruktur und das Liefern der verkapselten Nachricht an das Abrechnungsuntersystem (600), welches mit dem CIC-Routingknoten verbunden ist, aufweist.

14. Verfahren nach Anspruch 12, in welchem das Abrechnungsuntersystem (600) eine Benutzungsmessungsapplikation (614) beinhaltet.

15. Verfahren nach Anspruch 12, in welchem das Abrechnungsuntersystem (600) eine Rechnungsstellungsapplikation (616) beinhaltet.

16. Verfahren nach einem der Ansprüche 1 - 15, in welchem das erste Netzwerkelement (106, 182 oder 184) eine Dienstevermittlungsstelle (SSP) (106) ist.

17. Verfahren nach einem der Ansprüche 1 - 16, in welchem das zweite Netzwerkelement (106, 182 oder 184) ein Medien-Netzübergangs-Steuergerät (MGC) (182 oder 184) ist.

18. Verfahren nach einem der Ansprüche 1 - 17, in welchem das Routing der ersten Signalisierungsnachricht an das zweite Netzwerk das Verkapseln der ersten Signalisierungsnachricht in einem IP-Datagramm beinhaltet.

19. Verfahren nach einem der Ansprüche 1 - 17, in welchem das Routing der ersten Signalisierungsnachricht an das zweite Netzwerkelement (106, 182 oder 184) das Erzeugen einer Sitzungsinitialisierungsprotokoll-(SIP-)formatierten Nachricht beinhaltet.

20. Verfahren nach einem der Ansprüche 1 - 17, in welchem das Routing der ersten Signalisierungsnachricht an das zweite Netzwerkelement (106, 182 oder 184) das Erzeugen einer H.323-formatierten Nachricht beinhaltet.

21. Computerprogrammprodukt, welches von Computern ausführbare Instruktionen aufweist, welche in einem von einem Computer lesbaren Medium zum Implementieren der Schritte in Anspruch 1 eingebettet bzw. enthalten sind.

22. Netzwerkelement (300), welches zum Routing einer Signalisierungsnachricht befähigt ist, basierend wenigstens zum Teil auf einem Leitungskennzeichnungs-Code-(CIC-)Parameter, welcher innerhalb der Signalisierungsnachricht spezifiziert ist, wobei das Netzwerkelement (300) aufweist:
(a) ein erstes Kommunikationsmodul (302), welches zum Übertragen von Nachrichten zu und zum Empfangen von Nachrichten von einem ersten Kommunikationsnetzwerk fähig ist;
(b) ein zweites Kommunikationsmodul (310), welches zum Übertragen von Nachrichten zu und Empfangen von Nachrichten von einem zweiten Kommunikationsnetzwerk in der Lage ist;
(c) eine CIC-Routingdatenbank (CRD) (320), welche einzigartig wenigstens in einem Teil durch CIC-Werte verschlüsselt oder indiziert ist und welche Routinginstruktionen enthält, welche mit jedem einzigartigen Schlüssel- oder Indexwert verbunden sind; und
(d) einen Nachrichtenroutingprozess (318), welcher in Hardware oder in Software implementiert ist und welcher mit einem der ersten und zweiten Kommunikationsmodule (302 oder 310) verbunden ist, welcher in der Lage ist, einen Suchlauf in der CIC-Routingdatenbank (320) durchzuführen, basierend auf wenigstens einem CIC-Code, welcher von einer ersten Signalisierungsnachricht extrahiert ist, welche von einem ersten Netzwerkelement (106, 182 oder 184) in dem ersten Kommunikationsnetzwerk durch einen der ersten und zweiten Kommunikationsmodule (302 oder 310) empfangen wird, um Routinginformation für die erste Nachricht zu orten, und in der Lage ist, die erste Nachricht an ein zweites Netzwerkelement (106, 182 oder 184) in einem zweiten Kommunikationsnetzwerk wegzulenken.

## Revendications

1. Procédé pour acheminer un message dans un réseau de communications basé sur des informations de code d'identification de circuit (CIC) contenues à l'intérieur du message, le procédé comprenant :
(a) la réception d'un premier message de signalisation ayant une valeur de code de point de destination (DPC), une valeur de code de point d'origine (OPC) SS7, et une valeur CIC en provenance d'un premier élément de réseau (106, 182 ou 184) dans un premier réseau de communication ;
(h) la détermination de si le premier message est un message de sous-système utilisateur RNIS (ISUP) ;
(c) en réponse à la détermination selon laquelle le premier message de signalisation est un message ISUP, l'exécution d'une recherche dans une base de données d'acheminement CIC (320) (CRD) en utilisant au moins la valeur CIC contenue dans le message ;
(d) l'utilisation des informations d'acheminement retournées par la recherche CRD pour acheminer le premier message de signalisation vers une liaison de communication sortante appropriée sur laquelle le premier message de signalisation peut être transmis ; et
(e) la transmission du premier message de signalisation sur la liaison de communication sortante à un second élément de réseau (106, 182, ou 184) dans un second réseau de communication.

2. Procédé selon la revendication 1, dans lequel l'acheminement du premier message de signalisation vers le second élément de réseau (106, 182, ou 184) comprend l'acheminement du premier message de signalisation vers un d'une pluralité de seconds éléments de réseau dans un second réseau de communication qui partagent une valeur DPC spécifiée dans le premier message de signalisation.

3. Procédé selon l'une quelconque des revendications 1 ou 2, dans lequel le premier message de signalisation est un message de signalisation du système de signalisation 7 (SS7).

4. Procédé selon la revendication 3, dans lequel le message de signalisation SS7 est un message de sous-système utilisateur RNIS (ISUP).

5. Procédé selon l'une quelconque des revendications 1 à 4, dans lequel le premier réseau de communication est un réseau SS7 et le second réseau de communication est un réseau à protocole Internet (IP).

6. Procédé selon l'une quelconque des revendications 1 à 5, dans lequel l'information clé utilisée dans la recherche CRD est la combinaison des valeurs DPC et CIC contenues dans le premier message de signalisation.

7. Procédé selon la revendication 6, dans lequel l'information clé comprend en outre la valeur OPC contenue dans le premier message de signalisation.

8. Procédé selon l'une quelconque des revendications 1 à 7, dans lequel l'information d'acheminement retournée par la base de données d'acheminement CIC (320) comprend une adresse réseau.

9. Procédé selon l'une quelconque des revendications 1 à 8, dans lequel l'information d'acheminement retournée par la base de données d'acheminement CIC (320) comprend une adresse IP et un numéro de port.

10. Procédé selon l'une quelconque des revendications 1 à 9, dans lequel l'information d'acheminement retournée par la base de données d'acheminement CIC (320) comprend une valeur d'état qui indique l'état opérationnel du second élément de réseau (106, 182, ou 184).

11. Procédé selon l'une quelconque des revendications 1 à 10 comprenant en outre la génération d'une copie du premier message de signalisation.

12. Procédé selon la revendication 11 comprenant la remise d'une copie du premier message de signalisation à un sous-système de comptabilité (600) associé au noeud d'acheminement CIC.

13. Procédé selon la revendication 12, dans lequel la remise d'une copie du premier message de signalisation au sous-système de comptabilité (600) comprend l'encapsulation d'une copie du premier message de signalisation dans une enveloppe de sous-système de commande de connexions sémaphores (SCCP) et la remise du message encapsulé au sous-système de comptabilité (600) associé au noeud d'acheminement CIC.

14. Procédé selon la revendication 12, dans lequel le sous-système de comptabilité (600) comprend une application de mesures d'utilisation (614).

15. Procédé selon la revendication 12, dans lequel le sous-système de comptabilité (600) comprend une application de facturation (616).

16. Procédé selon l'une quelconque des revendications 1 à 15, dans lequel le premier élément de réseau (106, 182, ou 184) est un point de commutation de service (SSP) (106).

17. Procédé selon l'une quelconque des revendications 1 à 16, dans lequel le second élément de réseau (106, 182, ou 184) est un contrôleur de passerelle de média (MGC) (182 ou 184).

18. Procédé selon l'une quelconque des revendications 1 à 17, dans lequel l'acheminement du premier message de signalisation vers le second réseau comprend l'encapsulation du premier message de signalisation dans un datagramme IP.

19. Procédé selon l'une quelconque des revendications 1 à 17, dans lequel l'acheminement du premier message de signalisation vers le second élément de réseau (106, 182, ou 184) comprend la génération d'un message formaté de protocole d'ouverture de session (SIP).

20. Procédé selon l'une quelconque des revendications 1 à 17, dans lequel l'acheminement du premier message de signalisation vers le second élément de réseau (106, 182, ou 184) comprend la génération d'un message formaté H.323.

21. Produit de programme informatique comprenant des instructions exécutables par ordinateur incorporées dans un support lisible par ordinateur pour mettre en oeuvre les étapes dans la revendication 1.

22. Elément de réseau (300) capable d'acheminer un message de signalisation sur la base d'au moins en partie un paramètre de code d'identification de circuit (CIC) qui est spécifié à l'intérieur du message de signalisation, l'élément de réseau (300) comprenant :
(a) un premier module de communication (302) capable de transmettre des messages à et de recevoir des messages d'un premier réseau de communications ;
(b) un second module de communication (310) capable de transmettre des messages à et de recevoir des messages d'un second réseau de communications ;
(c) une base de données d'acheminement CIC (CRD) (320) qui est classée selon une clé ou indexée de manière unique au moins en partie par des valeurs CIC et qui contient des instructions d'acheminement associées à chaque valeur de clé ou d'index unique ; et
(d) un processus d'acheminement de message (318) mis en oeuvre dans un matériel ou un logiciel et associé à un des premier et second modules de communication (302 ou 310) capable d'effectuer une recherche dans la base de données d'acheminement CIC (320) sur la base d'au moins un code CIC extrait d'un premier message de signalisation reçu d'un premier élément de réseau (106, 182, ou 184) dans le premier réseau de communication par un des premier et second modules de communication (302 ou 310) pour localiser des informations d'acheminement pour le premier message et capable d'acheminer le premier message vers un second élément de réseau (106, 182, ou 184) dans un second réseau de communications.
